# EUROPÄISCHE PATENTSCHRIFT

(11) **EP 2 848 870 B1**
(45) Veröffentlichungstag und Bekanntmachung des Hinweises auf die Patenterteilung: **16.01.2019**
(21) Anmeldenummer: 14175615.5
(22) Anmeldetag: 03.07.2014
(51) Int. Cl.: F24D 3/08, F24D 3/18, F24D 17/02, F24F 3/06

(54) **Heizungsanlage und Verfahren zum Betreiben einer Heizungsanlage**
Heating system and method for operating a heating system
Installation de chauffage et procédé destiné au fonctionnement d'une installation de chauffage

(30) Priorität: 13.09.2013 DE 102013218436
(43) Veröffentlichungstag der Anmeldung: 18.03.2015
(60) Teilanmeldung: 16184240.6
(73) Patentinhaber: Robert Bosch GmbH, 70442 Stuttgart (DE)
(72) Erfinder: Eklund, Gunnar, 57392 Tranas (SE); Tollsten, Mikael, 57393 Tranas (SE); Gustafsson, Kjell, 58336 Linkoeping (SE)

(56) Entgegenhaltungen:
- EP-A1- 2 413 042
- EP-A2- 2 461 109
- EP-A2- 2 538 146

## Beschreibung

Die Erfindung betrifft eine Heizungsanlage mit den Merkmalen des Oberbegriffs des Anspruchs 1.

Heizungsanlagen mit einer umschaltbaren Wärmequelle, die sowohl Wärme abgeben als auch aufnehmen kann und somit sowohl zum Kühlen als auch zum Erwärmen einer in einem Kühl- und Heizkreislauf geführten Wärmeträgerflüssigkeit dient, finden vielfältigen Einsatz beispielsweise zur Klimatisierung von Gebäuden. Als Wärmeträgerflüssigkeit wird dabei in der Regel Wasser verwendet, das als Wärmeträgerflüssigkeit dient.

Neben einer Raumklimatisierung erfolgt üblicherweise über die Heizungsanlage auch die Erwärmung von (Brauch-) Wasser. Das Wasser wird dabei in einem Warmwasserspeicher erwärmt, der dafür einen von der Wärmeträgerflüssigkeit durchströmbaren Wärmetauscher aufweist.

Problematisch bei derartigen Heizungsanlagen ist ein Umschalten insbesondere von einem Kühlmodus, indem eine Raumluft gekühlt wird, in einem Warmwassermodus, bei dem eine Erwärmung des im Warmwasserspeicher befindlichen Wassers vorgenommen werden soll.

Da die Wärmeträgerflüssigkeit im Kühlmodus mit relativ geringer Temperatur durch den Kühl- und Heizkreislauf geführt wird, wird sie bei bekannten Heizungsanlagen direkt nach dem Umschalten vom Kühlmodus in den Warmwassermodus mit der gleichen geringen Temperatur zum Warmwasserspeicher geführt und bewirkt dort zunächst eine Abkühlung. Erst wenn ausreichend Wärme von der Wärmequelle auf die Wärmeträgerflüssigkeit übertragen worden ist und nicht nur die Wärmeträgerflüssigkeit, sondern auch die entsprechenden Wärmetauscherflächen entsprechend erwärmt wurden, erfolgt die gewünschte Erwärmung des Warmwasserspeichers.

In entsprechender Weise kommt es beim Umschalten vom Warmwassermodus in den Kühlmodus dann dazu, dass zunächst noch warme Wärmeträgerflüssigkeit in den Klimatisierungszweig geführt wird, sodass zeitweise über den Wärmetauscher Wärme abgegeben wird, bis die Wärmeträgerflüssigkeit entsprechend abgekühlt worden ist.

Der Wärmetauscher kann beispielsweise mit einem Gebläse versehen sein, mit dessen Hilfe Raumluft über den Wärmetauscher gefördert wird. Beim Umschalten vom Warmwassermodus in den Kühlmodus erfolgt dann zunächst eine Erwärmung der über den Wärmetauscher geführten Luft, bis die Wärmeträgerflüssigkeit nach Umschalten der Wärmequelle entsprechend abgekühlt worden ist somit die gewünschte Abkühlung der Raumluft erfolgen kann.

Die EP 2538146 A2 offenbart ein Kalt-/Warmwasserversorgungsgerät nach dem Oberbegriff des Patentanspruchs 1.

Der Erfindung liegt nun die Aufgabe zugrunde, die Nachteile des Stands der Technik zu beseitigen und insbesondere einen Übergang beim Umschalten zwischen einem Kühlmodus, einem Warmwassermodus und einem Heizmodus zu verbessern. Damit soll insbesondere eine Komfortsteigerung erreicht werden.

Diese Aufgabe wird erfindungsgemäß durch eine Heizungsanlage mit den Merkmalen des Anspruchs 1 gelöst. Vorteilhafte Ausgestaltungen finden sich in den Unteransprüchen.

Bei einer Heizungsanlage mit mindestens einer zwischen einem Heizmodus und einem Kühlmodus umschaltbaren Wärmequelle zum wahlweisen Kühlen oder Erwärmen einer Wärmeträgerflüssigkeit, insbesondere von Wasser, die in einem Kühl- und Heizkreislauf geführt ist, in dem über einen Vorlauf und einen Rücklauf die Wärmequelle eingebunden ist, wobei der Kühl- und Heizkreislauf einen Klimatisierungszweig und einen Warmwasserzweig aufweist, die über ein erstes Mehrwegeventil mit dem Vorlauf verbunden sind und in den Rücklauf münden, wobei im Klimatisierungszweig mindestens ein Wärmetauscher zum Temperieren eines Raumklimas und im Warmwasserzweig mindestens ein Warmwasserspeicher angeordnet ist, wobei eine erste Bypassverbindung zwischen Vorlauf und Rücklauf parallel zum Klimatisierungszweig als schaltbare Bypassverbindung ausgebildet ist, ist erfindungsgemäß parallel zur ersten Bypassverbindung mindestens eine zweite Bypassverbindung vorgesehen, wobei die mindestens eine zweite Bypassverbindung als offene Bypassverbindung ausgebildet ist, wobei insbesondere in der offenen Bypassverbindung ein Zwischenspeicher angeordnet ist.

Eine offene Bypassverbindung stellt dabei eine Bypassverbindung dar, die immer offen ist, während im Unterschied dazu bei einer schaltbaren Bypassverbindung ein Durchfluss beispielsweise über ein Schaltventil steuerbar ist. Durch die Kombination von offener Bypassverbindung mit einer dazu parallelen schaltbaren Bypassverbindung lässt sich ein Strömungswiderstand der gesamten Bypassverbindung beeinflussen. Darüber hinaus ist es möglich, in der offenen Bypassverbindung einen Zwischenspeicher anzuordnen und so ein größeres Volumen für die Wärmeträgerflüssigkeit bereitzustellen, also beispielsweise eine größere Wassermenge im Klimatisierungszweig vorzusehen. Dadurch wird eine höhere Wärmekapazität in der Wärmeträgerflüssigkeit erreicht, so dass beispielsweise eine größere Wärmemenge gespeichert wird.

Über diese Bypassverbindung lässt sich dann eine Zirkulation der Wärmeträgerflüssigkeit im Kühl- und Heizkreislauf aufrechterhalten, ohne dass der Klimatisierungszweig und/oder der Warmwasserzweig durchströmt werden. Dadurch kann die Heizungsanlage in Zwischenmodi betrieben werden, in denen die Wärmeträgerflüssigkeit nur durch einen Teil des Kühl- und Heizkreislaufes (5) zirkuliert. Somit lässt sich die Menge an Wärmeträgerflüssigkeit, die beim Umschalten zwischen Kühlmodus, Heizmodus und Warmwassermodus auf eine neue Temperatur gebracht werden muss, verringern. Auch die Anzahl durchströmter Flächen und Wärmetauscher wird so minimiert. Beispielsweise erfolgt beim Umschalten vom Kühlmodus in den Warmwassermodus solange eine Zirkulation der Wärmeträgerflüssigkeit über Vorlauf, Bypassverbindung und Rücklauf sowie die Wärmequelle, bis die Wärmeträgerflüssigkeit auf die gewünschte Temperatur erwärmt worden ist, während die Wärmeträgerflüssigkeit, die sich im Klimatisierungszweig befindet, im Wesentlichen seine kühlere Temperatur beibehält. Im Warmwasserzweig befindet sich in der Regel eher wärmere Wärmeträgerflüssigkeit, da dort keine gekühlte Wärmeträgerflüssigkeit gefördert werden soll. Somit erfolgt nach Öffnen des Warmwasserzweigs sehr schnell ein Aufwärmen des Warmwasserspeichers. Im umgekehrten Fall erfolgt erst dann ein erneuter Zulauf von Wärmeträgerflüssigkeit in den Klimatisierungszweig, wenn diese auf die entsprechende niedrige Temperatur gebracht worden ist.

Als umschaltbare Wärmequelle wird bevorzugterweise eine Wärmepumpe verwendet, die insbesondere als Luftwasserwärmepumpe ausgebildet ist. Eine Wärmepumpe lässt sich ohne großen Aufwand sowohl zur Wärmeaufnahme als auch zur Wärmeabgabe nutzen, also zum wahlweisen Kühlen oder Erwärmen einer Wärmeträgerflüssigkeit. Dabei besitzt eine Wärmepumpe in der Regel einen relativ hohen Wirkungsgrad und damit einen geringen Ressourcenverbrauch.

Die Bypassverbindung ist vorzugsweise in Strömungsrichtung hinter dem Mehrwegeventil ausgebildet, also weiter entfernt von der Wärmepumpe als das Mehrwegeventil. Somit muss das Mehrwegeventil durchströmt werden, bevor die Wärmeträgerflüssigkeit über die Bypassverbindung wieder in den Rücklauf gelangen kann. Dabei zweigt die Bypassverbindung bevorzugterweise vom Klimatisierungszweig ab.

Vorzugsweise weist der Heiz- und Kühlkreislauf zumindest eine erste Pumpe auf, die insbesondere im Rücklauf angeordnet ist. Mithilfe der Pumpe lässt sich eine Zirkulation der Wärmeträgerflüssigkeit im Heiz- und Kühlkreislauf sicherstellen. Durch eine entsprechende Leistungsregelung der Pumpe kann dabei auch eine Temperaturregelung erfolgen, da ein Wärmeaustausch zwischen der Wärmequelle und der Wärmeträgerflüssigkeit beziehungsweise der Wärmeträgerflüssigkeit und weiteren Wärmetauschern unter anderem von der Strömungsgeschwindigkeit abhängig ist.

Vorzugsweise ist im Klimatisierungszweig eine zweite Pumpe angeordnet. Dadurch ergeben sich bevorzugte Steuerungsmöglichkeiten. Beispielsweise ist es möglich, die zweite Pumpe mit einer anderen Leistung zum Betreiben als die erste Pumpe, sodass im Klimatisierungszweig ein höherer Volumenstrom gefördert wird, als über den Rücklauf zur Wärmepumpe transportiert wird. Somit lässt sich eine allmähliche Angleichung der Temperatur der Wärmeträgerflüssigkeit, die im Klimatisierungszweig ist, an die Wärmeträgerflüssigkeit, die über den Rücklauf zur Wärmequelle und über den Vorlauf wieder in Richtung Klimatisierungszweig und Bypassverbindung transportiert wird, erreichen. Dies ist insbesondere dann vorteilhaft, wenn die Wärmequelle mehr Wärme abgibt, als über die Wärmetauscher im Klimatisierungszweig abgegeben werden soll. Zumindest über einen gewissen Zeitraum, bei dem die Wärmepumpe in ihrer Wärmeabgabe gedrosselt wird, ist dann die Wärmeabgabe über die Wärmetauscher des Klimatisierungszweiges geringer als die von der Wärmequelle bereitgestellte Wärme. Dadurch kann Wunschvorgaben eines Bedieners beispielsweise an eine Raumtemperatur feinfühliger und schneller entsprochen werden, wobei auch beim Umschalten vom Warmwassermodus in einen Heizmodus kein Überschwingen der Temperatur der Wärmeträgerflüssigkeit im Klimatisierungszweig zu befürchten ist. Dementsprechend werden auch damit zusammenhängende Begleiterscheinungen, wie beispielsweise das Auftreten von Geräuschen in den Wärmetauschern aufgrund von unterschiedlichen Wärmedehnungen der verwendeten Materialien vermieden.

In einer bevorzugten Ausführungsform ist die schaltbare Bypassverbindung über das erste Mehrwegeventil in den Kühl- und Heizkreislauf eingebunden, das insbesondere als Vierwegeventil ausgebildet ist. Durch eine entsprechende Schaltung dieses Mehrwegeventils kann die Wärmeträgerflüssigkeit dann durch den Warmwasserzweig, den Klimatisierungszweig und/oder die schaltbare Bypassverbindung geführt werden. Die Heizungsanlage ist so in unterschiedlichen Modi betreibbar.

In einer alternativen Ausgestaltung ist die schaltbare Bypassverbindung über ein zweites Mehrwegeventil in den Kühl- und Heizkreislauf eingebunden, das insbesondere als Dreiwegeventil ausgebildet ist. Dadurch ist auch eine nachträgliche Integration einer derartigen schaltbaren Bypassverbindung relativ einfach möglich. Auch kann es je nach räumlichen Gegebenheiten günstiger sein, zwei Dreiwegeventile zu verwenden als ein Vierwegeventil wie in der vorgenannten Ausgestaltung.

Dabei ist besonders bevorzugt, dass der Klimatisierungszweig über das zweite Mehrwegeventil mit dem ersten Mehrwegeventil verbunden ist. Das zweite Mehrwegeventil befindet sich also in Strömungsrichtung hinter dem ersten Mehrwegeventil. In anderen Worten muss die vom Vorlauf kommende Wärmeträgerflüssigkeit zunächst durch das erste Mehrwegeventil geführt werden, bevor es zum zweiten Mehrwegeventil gelangt. Dadurch wird erreicht, dass die Wärmeträgerflüssigkeit nicht vom Vorlauf über die Bypassverbindung in den Rücklauf gelangen kann, wenn sie durch den Warmwasserzweig geführt werden soll.

Vorzugsweise ist im Vorlauf ein Zuheizer angeordnet, der insbesondere als elektrischer Zuheizer ausgebildet ist. Mithilfe eines derartigen Zuheizers kann zusätzliche Wärme auf die Wärmeträgerflüssigkeit übertragen werden. Dadurch lässt sich beispielsweise ein schnelleres Erwärmen der Wärmeträgerflüssigkeit erreichen, aber auch im Falle einer zu geringen Leistung der umschaltbaren Wärmequelle zusätzliche Wärme einbringen. Dieses kann beispielsweise bei hohen Außentemperaturen erforderlich sein, wenn die umschaltbare Wärmequelle als Wärmepumpe ausgebildet ist, die beispielsweise außerhalb eines Gebäudes angeordnet ist.

Nicht umfasst von der Erfindung ist ein Verfahren zum Betreiben einer entsprechenden Heizungsanlage, indem die Heizungsanlage wahlweise in einem der folgenden Modi betrieben wird:
a) Einem Heizmodus, indem von der Wärmequelle und/oder dem Zuheizer Wärme an die Wärmeträgerflüssigkeit abgegeben und im Klimatisierungszweig über den mindestens einen Wärmetauscher abgegeben wird, wobei der Warmwasserzweig geschlossen ist,
b) einem Kühlmodus, indem von der Wärmequelle Wärme von der Wärmeträgerflüssigkeit aufgenommen wird, die im Klimatisierungszweig über den mindestens einen Wärmetauscher an die Wärmeträgerflüssigkeit übertragen wird, wobei der Warmwasserzweig geschlossen ist,
c) einem Warmwassermodus, indem von der Wärmequelle und/oder dem Zuheizer Wärme an die Wärmeträgerflüssigkeit abgegeben und im Warmwasserzweig an den Warmwasserspeicher abgegeben wird, wobei der Klimatisierungszweig geschlossen ist,
d) einem ersten Zwischenmodus zum schnellen Abkühlen der Wärmeträgerflüssigkeit beim Umschalten vom Warmwassermodus in den Kühlmodus, indem von der Wärmequelle Wärme von der Wärmeträgerflüssigkeit aufgenommen wird, wobei der Warmwasserzweig geschlossen und die Wärmeträgerflüssigkeit durch einen Vorlauf, mindestens eine Bypassverbindung und einen Rücklauf zirkuliert wird.

Dabei ist steht bevorzugterweise noch folgender Modus zum Betreiben der Heizungsanlage zur Verfügung:
e) einen zweiten Zwischenmodus zum schnellen Erwärmen der Wärmeträgerflüssigkeit beim Umschalten vom Kühlmodus in den Warmwassermodus, indem von der Wärmequelle und/oder dem Zuheizer Wärme an die Wärmeträgerflüssigkeit abgegeben wird, wobei bei geschlossenem Warmwasserzweig die Wärmeträgerflüssigkeit durch den Vorlauf, die Bypassverbindung und den Rücklauf zirkuliert wird.

Durch das Vorsehen der Zwischenmodi lässt sich die Menge an Wärmeträgerflüssigkeit, die auf die kühlere Temperatur abgekühlt beziehungsweise auf eine höhere Temperatur aufgewärmt werden muss, sehr stark verringern. Darüber hinaus sind auch nicht alle Wärmetauscher und Leitungen auf eine neue Temperatur zu bringen. Vielmehr kann beispielsweise beim Umschalten auf den Warmwassermodus der gesamte Klimatisierungszweig mit der darin befindlichen Wärmeträgerflüssigkeit auf seiner vorherigen Temperatur verbleiben, während nur die im Vorlauf, in der Bypassverbindung und im Rücklauf befindliche Wärmeträgerflüssigkeit neu temperiert werden muss. Die Zeit und die erforderliche Energie beim Umschalten zwischen Heizmodus, Kühlmodus und Warmwassermodus lassen sich so reduzieren und damit nicht nur ein Wirkungsgrad verbessern, sondern auch ein Komfort erhöhen.

Dabei wird im ersten Zwischenmodus eine Pumpenleistung der ersten, im Rücklauf angeordneten Pumpe bevorzugterweise auf ein Minimum gesetzt, die Pumpe also mit einer geringen Förderleistung betrieben. Dementsprechend ist eine Strömungsgeschwindigkeit der Wärmeträgerflüssigkeit relativ gering, sodass zum einen viel Wärme von der Wärmeträgerflüssigkeit auf die Wärmequelle übergeben werden kann und zum anderen eine Beeinträchtigung der im Klimatisierungszweig befindlichen Wärmeträgerflüssigkeit gering gehalten wird, auch wenn dieser nicht durch Stellventile geschlossen wird.

Bevorzugterweise ist noch ein dritter Zwischenmodus zum Temperieren der Wärmeträgerflüssigkeit beim Umschalten vom Warmwassermodus in den Heizmodus vorgesehen, indem Wärme von der Wärmequelle und/oder vom Zuheizer an die Wärmeträgerflüssigkeit abgegeben wird, wobei der Warmwasserzweig geschlossen wird und durch den Klimatisierungszweig über die Bypassverbindung eine größere Wärmeträgerflüssigkeitsmenge zirkuliert wird, als durch den Rücklauf zur Wärmequelle zurückgeführt wird. Die Heizungsanlage kann dann auch im dritten Zwischenmodus betrieben werden. Dadurch kann dem Umstand Rechnung getragen werden, dass im Warmwassermodus die Wärmequelle häufig mit maximaler Leistung betrieben wird, also sehr viel Wärme an die Wärmeträgerflüssigkeit abgibt, während im Heizmodus häufig eine geringere Temperatur der Wärmeträgerflüssigkeit gewünscht ist. Durch den dritten Zwischenmodus lässt sich dann ein Überschwingen der Temperatur der Wärmeträgerflüssigkeit im Klimatisierungszweig vermeiden, das zum einen eine Komfortbeeinträchtigung darstellen würde und zum anderen das Auftreten von Geräuschen aufgrund von Wärmedehnungen der verwendeten Materialien hervorrufen kann. Ein Teil der Wärmeträgerflüssigkeit kann dabei mehrfach durch den Klimatisierungszweig geführt werden, bevor es erneut an der Wärmequelle vorbeikommt, um dort Wärme aufzunehmen. Dadurch lässt sich die Temperatur der Wärmeträgerflüssigkeit im Klimatisierungszweig unterhalb einer Temperatur der Wärmeträgerflüssigkeit im Vorlauf halten, bis die Leistung der Wärmequelle soweit reduziert ist, dass die abgegebene Wärme der im Klimatisierungszweig abgegebenen Wärme entspricht.

Eine besonders einfache Ausgestaltung sieht dabei vor, dass im dritten Zwischenmodus eine im Klimatisierungszweig angeordnete zweite Pumpe mit mehr Leistung betrieben wird, als eine im Rücklauf angeordnete erste Pumpe, wobei die erste Pumpe insbesondere mit einer minimalen Leistung betrieben wird. Dadurch ist es relativ einfach möglich, durch den Klimatisierungszweig eine größere Menge an Wärmeträgerflüssigkeit zu zirkulieren als über Rücklauf und Vorlauf an der Wärmequelle vorbeizuführen.

In einer bevorzugten Ausgestaltung wird im ersten Zwischenmodus und/oder im zweiten Zwischenmodus und/oder im dritten Zwischenmodus eine schaltbare Bypassverbindung geöffnet. In einer dazu gegebenenfalls parallel verlaufenden offenen Bypassverbindung kann dann ein Zwischenspeicher angeordnet sein, um das Volumen der Wärmeträgerflüssigkeit zu vergrößern und damit eine größere Wärmekapazität bereitzustellen.

Vorzugsweise wird im ersten und zweiten Zwischenmodus die zweite im Klimatisierungszweig angeordnete Pumpe gestoppt. Dadurch wird im Klimatisierungszweig im Wesentlichen die Wärmeträgerflüssigkeit gehalten, die die entsprechende Temperatur aufweist. Eine Vermischung mit der über die Bypassverbindung im Zwischenmodus geführten Wärmeträgerflüssigkeit wird dann gering gehalten. Außerdem wird durch Stoppen der zweiten Pumpe eine Energieaufnahme der Heizungsanlage minimiert.

Vorzugsweise wird vom zweiten Zwischenmodus in den Warmwassermodus umgeschaltet, wenn die Wärmeträgerflüssigkeit im Rücklauf oder im Vorlauf zumindest eine Warmwasserspeichertemperatur erreicht hat. Die Warmwasserspeichertemperatur kann dabei aktuell gemessen werden oder als Wert hinterlegt sein. Damit wird sichergestellt, dass die Wärmeträgerflüssigkeit aus dem Warmwasserspeicher zumindest keine Wärme aufnimmt, sondern direkt zur Erwärmung des im Warmwasserspeicher gespeicherten Wassers dient.

Vorzugsweise wird im zweiten Zwischenmodus die erste Pumpe zwischen einer Minimalleistung bei einer Temperatur der Wärmeträgerflüssigkeit im Rücklauf oder im Vorlauf unterhalb einer unteren Grenztemperatur und einer Maximalleistung bei einer Temperatur der Wärmeträgerflüssigkeit in Rücklauf oberhalb einer oberen Grenztemperatur betrieben, wobei ein Zusammenhang zwischen der Temperatur der Wärmeträgerflüssigkeit im Rücklauf und der Leistung der ersten Pumpe insbesondere linear ist. Über die Leistung der Pumpe lässt sich so eine Temperaturregelung erreichen, wobei diese aufgrund des linearen Zusammenhangs relativ einfach aufgebaut sein kann. Die untere Grenztemperatur und/oder die obere Grenztemperatur können dabei insbesondere durch einen Benutzer vorgegeben und entsprechend hinterlegt werden.

Bevorzugterweise wird vom ersten Zwischenmodus in den Kühlmodus umgeschaltet, wenn eine Temperatur der Wärmeträgerflüssigkeit im Rücklauf um einen vorgebbaren Betrag unterhalb einer Temperatur der Wärmeträgerflüssigkeit im Klimatisierungszweig liegt. Ein unnötiges Erwärmen der Wärmeträgerflüssigkeit im Klimatisierungszweig, und damit eine Wärmeabgabe im Kühlmodus über den Wärmetauscher des Klimatisierungszweigs werden so vermieden. Dementsprechend ergibt sich ein hoher Wirkungsgrad bei einem hohen Komfort.

Vorzugsweise wird die Heizungsanlage wahlweise in einem Drosselungsmodus betrieben, indem eine Leistung der Wärmequelle reduziert wird, wobei die erste Pumpe zwischen einer Minimalleistung bei einer Temperatur der Wärmeträgerflüssigkeit im Rücklauf unterhalb einer unteren Grenztemperatur und einer Maximalleistung bei einer Temperatur der Wärmeträgerflüssigkeit im Rücklauf oberhalb einer oberen Grenztemperatur betrieben wird, wobei ein Zusammenhang zwischen der Temperatur der Wärmeträgerflüssigkeit im Rücklauf und der Leistung der ersten Pumpe insbesondere linear ist. Der Drosselungsmodus kann dann parallel zum dritten Zwischenmodus ablaufen und dazu dienen, die von der Wärmequelle abgegebene Wärme zu reduzieren. Die im dritten Modus über die Bypassverbindung geführte Wärmeträgerflüssigkeit kann dann temperaturgeregelt auf eine gewünschte Temperatur abgekühlt werden und die von der Wärmequelle bereitgestellte Wärme an die von den Wärmetauschern im Klimatisierungszweig abgegebene Wärme angeglichen werden. Sobald die Temperatur der Wärmeträgerflüssigkeit im Rücklauf in etwa einer Temperatur der Wärmeträgerflüssigkeit im Klimatisierungszweig entspricht, kann der Drosselungsmodus beendet und die Heizungsanlage alleine im Heizmodus weiter betrieben werden. Die obere und/oder untere Grenztemperatur kann dabei beispielsweise durch einen Benutzer individuell vorgegeben werden.

Bevorzugte Ausführungsbeispiele der Erfindung werden im Folgenden in Verbindung mit den Zeichnungen näher beschrieben. Hierin zeigen in schematischer Ansicht:
- Fig. 1: eine Heizungsanlage mit einer offenen Bypassverbindung,
- Fig. 2: eine Heizungsanlage mit einer offenen Bypassverbindung und einer schaltbaren Bypassverbindung und
- Fig. 3: eine weitere Ausgestaltung einer Heizungsanlage mit einer offenen Bypassverbindung und einer schaltbaren Bypassverbindung.

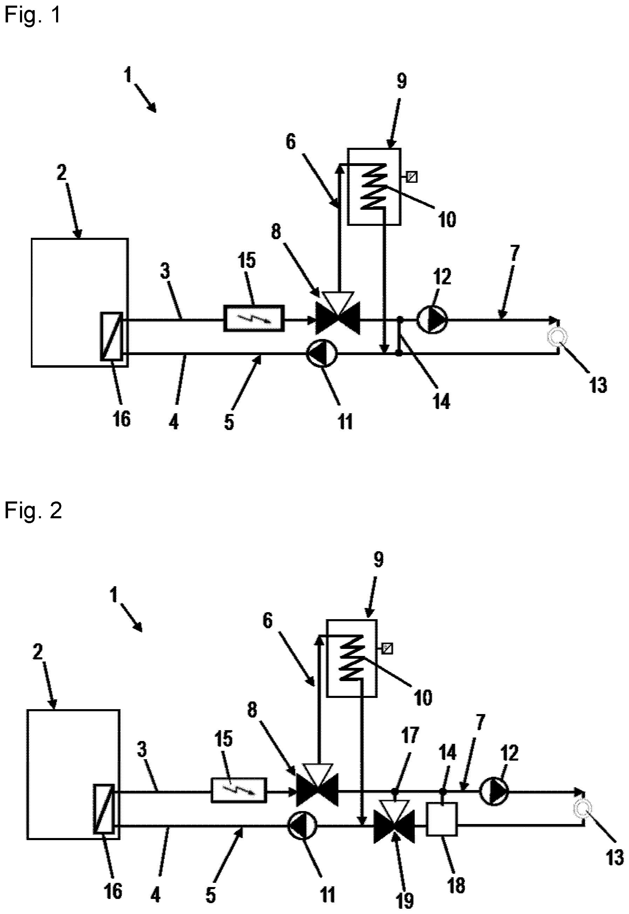

In Figur 1 ist eine Heizungsanlage 1 schematisch dargestellt, die eine zwischen einem Heizmodus und einem Kühlmodus umschaltbare Wärmequelle 2 aufweist, die über einen Vorlauf 3 und einen Rücklauf 4 in einen Kühl- und Heizkreislauf 5 eingebunden ist. Der Kühl- und Heizkreislauf 5 weist einen Warmwasserzweig 6 und einen Klimatisierungszweig 7 auf, die über ein Mehrwegeventil 8, das bei diesem Ausführungsbeispiel als Dreiwegeventil ausgebildet ist, miteinander und mit dem Vorlauf 3 verbunden sind. Dabei verlaufen der Warmwasserzweig 6 und der Klimatisierungszweig 7 parallel zueinander, sodass je nach Stellung des Mehrwegeventils 8 die vom Vorlauf kommende Wärmeträgerflüssigkeit durch den Warmwasserzweig 6 zum Rücklauf 4 oder durch den Klimatisierungszweig 7 zum Rücklauf 4 geführt wird.

Im Warmwasserzweig 6 ist ein Warmwasserspeicher 9 angeordnet, in dem Wasser erwärmt und gespeichert werden kann. Dafür kann im Warmwasserspeicher 9 über einen Wärmetauscher 10 Wärme von der Wärmeträgerflüssigkeit aus dem Warmwasserzweig 6 auf das Wasser im Warmwasserspeicher 9 übertragen werden.

Zum Sicherstellen einer Zirkulation der Wärmeträgerflüssigkeit im Kühl- und Heizkreislauf 5 ist im Rücklauf 4 eine erste Pumpe 11 angeordnet. Eine zweite Pumpe 12 befindet sich im Klimatisierungszweig 7. In Reihe mit der zweiten Pumpe 12 ist dabei ein Wärmetauscher 13 im Klimatisierungszweig 7 angeordnet, der zum Wärmeaustausch zwischen der Wärmeträgerflüssigkeit und beispielsweise einer Raumluft dient. Anstelle eines Wärmetauschers 13 können dabei auch mehrere Wärmetauscher vorgesehen werden.

Parallel zum Klimatisierungszweig 7 ist eine Bypassverbindung 14 vorgesehen, die den Vorlauf 3 mit dem Rücklauf 4 verbindet. Dabei handelt es sich um eine offene Bypassverbindung, die immer offen ist, also nicht beispielsweise durch ein Ventil geschlossen wird. Mithilfe der offenen Bypassverbindung kann dabei der Klimatisierungszweig mit der zweiten Pumpe 12 und dem Wärmetauscher 13 umgangen werden. Dabei ist die offene Bypassverbindung 14 allerdings in Strömungsrichtung hinter dem Mehrwegeventil 8 angeordnet, sodass bei einer Schaltung des Mehrwegeventils derart, dass die Wärmeträgerflüssigkeit durch den Warmwasserzweig geleitet wird und nicht durch den Klimatisierungszweig 7 geführt werden soll, nicht aktiv ist.

Im Vorlauf 3 ist noch ein optionaler Zuheizer 15 angeordnet, mit dem zusätzliche Wärme in die Wärmeträgerflüssigkeit eingebracht werden kann, falls eine besonders schnelle Erwärmung der Wärmeträgerflüssigkeit erforderlich ist oder falls von der Wärmequelle 2 nicht ausreichend Wärme zur Verfügung gestellt werden kann. Dies kann beispielsweise passieren, wenn die umschaltbare Wärmequelle 2 als Wärmepumpe, insbesondere als Luftwasserwärmepumpe ausgebildet ist. Gerade bei kompakten Ausgestaltungen der Wärmepumpe, die dann beispielsweise vollständig außerhalb eines Gebäudes angeordnet ist, kann bei sehr kalten Außentemperaturen die Leistung möglicherweise nicht ausreichend sein, um ausreichend Wärme bereitzustellen.

Gezeigt ist von der Wärmequelle 2 nur ein Wärmetauscher 16, der bei einer Ausbildung der Wärmequelle 2 als Kondensator beziehungsweise Verdampfer dient. Dementsprechend ist Wärme zwischen dem Wärmetauscher 16 und der durch Rücklauf 4 und Vorlauf 3 geführten Wärmeträgerflüssigkeit übertragbar.

Die Heizungsanlage 1 kann nun in verschiedenen Modi betrieben werden. In einem Heizmodus wird dabei von der Wärmequelle 2 Wärme bereitgestellt und an die Wärmeträgerflüssigkeit übertragen, die dann über den Vorlauf durch das Mehrwegeventil 8 in den Klimatisierungszweig 7 geführt wird. Dafür wird sowohl die erste Pumpe 11 als auch die zweite Pumpe 12 betrieben. Die Wärmeträgerflüssigkeit gelangt im Klimatisierungszweig dann zum mindestens einen Wärmetauscher 13 und gibt dort Wärme an die Umgebung ab. Anschließend wird sie in abgekühlter Form über den Rücklauf 4 zurück zur Wärmequelle 2 geleitet, durch die sie erneut erwärmt wird. Die Wärmeträgerflüssigkeit ist dabei bevorzugterweise Wasser. Unterschiedliche Fördergeschwindigkeiten der ersten Pumpe 11 und der zweiten Pumpe 12 können dann über die Bypassverbindung 14 ausgeglichen werden, ohne dass es zu Druckschwankungen kommt.

Der Kühlmodus der Heizungsanlage 1 unterscheidet sich vom Heizmodus nur darin, dass von der Wärmequelle 2 die Wärme nicht an die Wärmeträgerflüssigkeit abgegeben wird, sondern von der Wärmeträgerflüssigkeit aufgenommen wird, also eine Kühlung der Wärmeträgerflüssigkeit erfolgt. Dementsprechend erfolgt auch über den Wärmetauscher 13 im Klimatisierungszweig eine Wärmeaufnahme aus der Umgebung, die dadurch entsprechend gekühlt wird. Die Wärmeträgerflüssigkeit wird dann vom Wärmetauscher 13 mit höherer Temperatur über den Rücklauf 4 zur Wärmequelle 2 geführt, als sie über den Vorlauf 3 in den Klimatisierungszweig 7 transportiert wird.

Sowohl im Heizmodus als auch im Kühlmodus ist das Mehrwegeventil 8 derartig geschaltet, dass die Wärmeträgerflüssigkeit vom Vorlauf 3 in den Klimatisierungszweig 7 gelangt, während der Warmwasserzweig 6 geschlossen ist.

Im Warmwassermodus, der dazu dient, im Warmwasserspeicher 9 befindliches Wasser zu erwärmen, wird das Mehrwegeventil derartig geschaltet, dass die über den Vorlauf kommende Wärmeträgerflüssigkeit in den Warmwasserzweig 6 geleitet wird, während der Klimatisierungszweig 7 gesperrt ist. Von der Wärmequelle 2 auf die Wärmeträgerflüssigkeit übertragene Wärme kann so über den Wärmetauscher 10 im Warmwasserspeicher 9 auf das in diesem befindliche Wasser übertragen werden und dies auf die gewünschte Temperatur von beispielsweise über 60° erhitzt werden. Zur Förderung der Wärmeträgerflüssigkeit im Warmwassermodus dient dabei nur die erste Pumpe 11, während die zweite Pumpe 12, die im Klimatisierungszweig 7 angeordnet ist, gestoppt werden kann. Die im Klimatisierungszweig 7 befindliche Wärmeträgerflüssigkeit bleibt dann während des Warmwassermodus relativ unbeweglich und mit im Wesentlichen gleichbleibender Temperatur im Klimatisierungszweig 7.

Der Heizmodus, der Kühlmodus und der Warmwassermodus erfordern jeweils unterschiedliche Temperaturen der Wärmeträgerflüssigkeit. Dabei sollte die Temperatur der Wärmeträgerflüssigkeit im Warmwassermodus üblicherweise am höchsten und im Kühlmodus am niedrigsten sein. Dafür erfolgt durch die Wärmequelle 2 im Heizmodus und im Warmwassermodus eine Wärmeabgabe und im Kühlmodus eine Wärmeaufnahme. Da die Wärmeträgerflüssigkeit als Wärmeträger dient, ist jedoch beim Umschalten zwischen den einzelnen Modi jeweils ein Erwärmen der Wärmeträgerflüssigkeit beziehungsweise Abkühlen der Wärmeträgerflüssigkeit erforderlich. Um die Menge gering zu halten, ist für den Betrieb der Heizungsanlage vorgesehen, verschiedene Zwischenmodi zu verwenden. Wenn vom Warmwassermodus beispielsweise in den Kühlmodus umgeschaltet werden soll, erfolgt zunächst ein Betrieb in einem ersten Zwischenmodus, bei dem die Wärmeträgerflüssigkeit durch Wärmeaufnahme der Wärmequelle 2 zunächst gekühlt wird und solange über das Mehrwegeventil 8 und die Bypassverbindung 14 direkt wieder in den Rücklauf 4 gefördert wird, bis eine Temperatur der Wärmeträgerflüssigkeit im Rücklauf 4 geringer ist als eine Temperatur der im Klimatisierungszweig 7 befindlichen Wärmeträgerflüssigkeit. Dafür wird der Warmwasserzweig 6 über das Mehrwegeventil 8 gesperrt.

Die Zirkulation der Wärmeträgerflüssigkeit erfolgt mit Hilfe der ersten Pumpe 11, die dabei beispielsweise mit einer minimalen Leistung betrieben wird, sodass die Wärmeträgerflüssigkeit eine relativ geringe Strömungsgeschwindigkeit annimmt. Erst wenn die über Vorlauf 3, Bypassverbindung 14 und Rücklauf 4 geförderte Wärmeträgerflüssigkeit ausreichend abgekühlt ist, wird die zweite Pumpe 12 im Klimatisierungszweig 7 gestartet und der Kühlmodus begonnen. Damit wird vermieden, dass im Kühlmodus zu warme Wärmeträgerflüssigkeit zu dem Wärmetauscher 13 gelangt. Vielmehr ist sehr schnell wieder eine Abkühlung über den Wärmetauscher 13 möglich.

Zum Umschalten vom Kühlmodus in den Warmwassermodus oder Heizmodus ist ein zweiter Zwischenmodus vorgesehen, indem von der Wärmequelle 2 Wärme an die Wärmeträgerflüssigkeit abgegeben wird und die Wärmeträgerflüssigkeit solange über Vorlauf 3, Bypassverbindung 14 und Rücklauf 4 mit Hilfe der ersten Pumpe 11 zirkuliert wird, bis die Temperatur der Wärmeträgerflüssigkeit ausreichend angestiegen ist und insbesondere oberhalb einer Temperatur des im Warmwasserspeicher 9 befindlichen Wassers liegt. Im zweiten Zwischenmodus wird dafür über das Mehrwegeventil 8 der Warmwasserzweig 6 abgesperrt und die zweite Pumpe 12 gestoppt.

Zum Umschalten vom Warmwassermodus in den Heizmodus ist ein dritter Zwischenmodus vorgesehen, da die Wärmeträgerflüssigkeit im Warmwassermodus in der Regel auf eine Temperatur erhöht wird, die oberhalb einer für den Heizmodus gewünschten Temperatur liegt. In diesem dritten Zwischenmodus wird weiterhin Wärme von der Wärmequelle an die Wärmeträgerflüssigkeit abgegeben und der Warmwasserzweig geschlossen, während der Klimatisierungszweig 7 geöffnet wird. Dabei wird allerdings die zweite Pumpe 12 mit einer höheren Leistung betrieben als die erste Pumpe 11, sodass über den Vorlauf 3 und den Rücklauf 4 eine geringere Wärmeträgerflüssigkeitsmenge fließt, die entsprechend Wärme von der Wärmequelle 2 aufnimmt, als durch den Klimatisierungszweig 7 und die Bypassverbindung 14 gefördert wird. Dementsprechend erfolgt keine übermäßige Erhöhung der Temperatur der Wärmeträgerflüssigkeit im Klimatisierungszweigs 7 durch die vorher im Warmwassermodus stark aufgewärmte Wärmeträgerflüssigkeit.

Beim dritten Zwischenmodus kann vorgesehen sein, diesen mit einem Drosselmodus zu kombinieren, in dem allmählich die Leistung der Wärmequelle beziehungsweise die abgegebene Wärme der Wärmequelle reduziert wird. Dabei kann eine Regelung der Pumpe auf Grundlage der Temperatur der Wärmeträgerflüssigkeit im Rücklauf 4 erfolgen.

Figur 2 zeigt nun eine weitere Ausgestaltung der Heizungsanlage 1, bei der nicht nur eine offene Bypassverbindung 14, sondern parallel dazu eine schaltbare Bypassverbindung 17 vorgesehen ist. Die schaltbare Bypassverbindung 17 verläuft dabei parallel zur offenen Bypassverbindung 14. In der offenen Bypassverbindung 14 ist dabei ein Zwischenspeicher 18 angeordnet, der eine zusätzliche Menge an Wärmeträgerflüssigkeit aufnehmen kann, um so die Wärmekapazität der Heizungsanlage zu erhöhen.

Die schaltbare Bypassverbindung 17 ist dabei über ein zweites Mehrwegeventil 19 in den Kühl- und Heizkreislauf 5 eingebunden, das im vorliegenden Fall rücklaufseitig ausgebildet ist. Über das zweite Mehrwegeventil 19 kann die schaltbare Bypassverbindung 17 geöffnet oder geschlossen werden.

Durch das Vorsehen des Zwischenspeichers 18 ist der Betrieb der Heizungsanlage in den Zwischenmodi, wie sie oben beschrieben wurden, nicht ohne weiteres möglich. Vielmehr ist dazu die schaltbare Bypassverbindung 17 notwendig. Die schaltbare Bypassverbindung 17 wird dafür in den Zwischenmodi geöffnet, im Heizmodus, im Kühlmodus und Warmwassermodus aber geschlossen. Im Übrigen verläuft der Betrieb der Heizungsanlage 1 nach Figur 2 ebenso wie nach Figur 1.

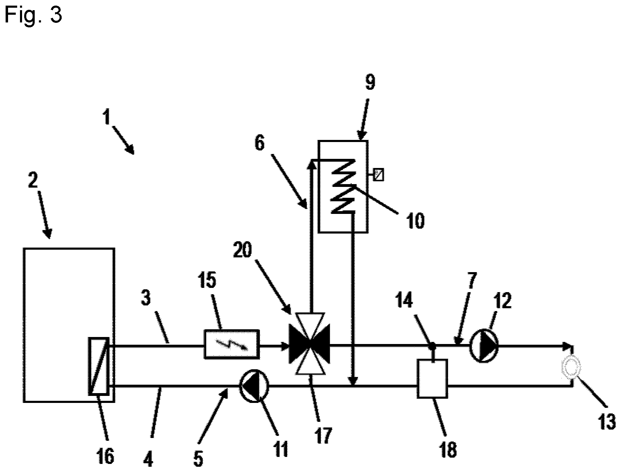

Figur 3 zeigt eine weitere Ausgestaltung der Heizungsanlage 1, die sich darin von der Heizungsanlage nach Figur 2 unterscheidet, dass anstelle zweier Dreiwegeventile 8, 19 ein einziges Vierwegeventil 20 vorgesehen ist. Das Vierwegeventil 20 stellt dabei eine Kombination der vorherigen Mehrwegeventile 8 und 19 dar. Der Betrieb der Heizungsanlage 1 entspricht dementsprechend dem Betrieb nach Figur 2.

Durch die erfindungsgemäße Ausgestaltung lässt sich die Menge an Wärmeträgerflüssigkeit, die beim Umschalten zwischen Heizmodus, Kühlmodus und Warmwassermodus temperiert werden muss, drastisch reduzieren. Auch müssen nicht alle Komponenten der Heizungsanlage jeweils an die neue Temperatur herangeführt werden. Vielmehr beschränkt sich dies auf einen relativ kleinen Bereich der Heizungsanlage, insbesondere auf Vorlauf, Rücklauf und die Wärmequelle selbst. Durch das Vorsehen zusätzlicher Temperatursensoren beispielsweise im Vorlauf 3, im Warmwasserspeicher 9, im Klimatisierungszweig 7 und/oder im Rücklauf 4 lässt sich dabei eine relativ genaue Regelung der Temperatur der Wärmeträgerflüssigkeit erreichen.

## Patentansprüche

1. Heizungsanlage (1) mit mindestens einer zwischen einem Heizmodus und einem Kühlmodus umschaltbaren Wärmequelle (2) zum wahlweisen Kühlen oder Erwärmen einer Wärmeträgerflüssigkeit, insbesondere Wassers, die in einem Kühl- und Heizkreislauf (5) geführt ist, in dem über einen Vorlauf (3) und einen Rücklauf (4) die Wärmequelle (2) eingebunden ist, wobei der Kühl- und Heizkreislauf (5) einen Klimatisierungszweig (7) und einen Warmwasserzweig (6) aufweist, die über ein erstes Mehrwegeventil (8) mit dem Vorlauf (3) verbunden sind und in den Rücklauf (4) münden, wobei im Klimatisierungszweig (7) mindestens ein Wärmetauscher (13) zum Temperieren eines Raumklimas und im Warmwasserzweig (6) mindestens ein Warmwasserspeicher (9) angeordnet ist, wobei eine erste Bypassverbindung zwischen Vorlauf (3) und Rücklauf (4) parallel zum Klimatisierungszweig (7) als schaltbare Bypassverbindung (17) ausgebildet ist,
**dadurch gekennzeichnet, dass**
parallel zur ersten Bypassverbindung (17) mindestens eine zweite Bypassverbindung (14) zwischen Vorlauf (3) und Rücklauf (4) parallel zum Klimatisierungszweig (7) vorgesehen ist, wobei die mindestens eine zweite Bypassverbindung als offene Bypassverbindung (14) ausgebildet ist, wobei insbesondere in der offenen Bypassverbindung (14) ein Zwischenspeicher (18) angeordnet ist.

2. Heizungsanlage nach Anspruch 1, **dadurch gekennzeichnet, dass** der Heiz- und Kühlkreislauf (5) zumindest eine erste Pumpe (11) aufweist, die insbesondere im Rücklauf angeordnet ist.

3. Heizungsanlage nach Anspruch 1 oder 2, **dadurch gekennzeichnet, dass** im Klimatisierungszweig (7) eine zweite Pumpe (12) angeordnet ist.

4. Heizungsanlage nach Anspruch 1, **dadurch gekennzeichnet, dass** die schaltbare Bypassverbindung (17) über das erste Mehrwegeventil (8) in den Kühl- und Heizkreislauf eingebunden ist, das insbesondere als Vier-Wege-Ventil (20) ausgebildet ist.

5. Heizungsanlage nach Anspruch 1, **dadurch gekennzeichnet, dass** die schaltbare Bypassverbindung (17) über ein zweites Mehrwegeventil (19) in den Kühl- und Heizkreislauf (5) eingebunden ist, das insbesondere als Drei-Wege-Ventil ausgebildet ist.

6. Heizungsanlage nach einem der vorhergehenden Ansprüche, **dadurch gekennzeichnet, dass** im Vorlauf (3) ein Zuheizer (15) angeordnet ist, der insbesondere als elektrischer Zuheizer ausgebildet ist.

## Claims

1. Heating system (1) having at least one heat source (2) which can be switched over between a heating mode and a cooling mode in order to selectively cool or heat a heat exchange liquid, in particular water, which is routed in a cooling and heating circuit (5), into which the heat source (2) is incorporated via a feed line (3) and a return line (4), the cooling and heating circuit (5) having an air-conditioning branch (7) and a hot water branch (6) which are connected to the feed line (3) via a first multiway valve (8) and open into the return line (4), at least one heat exchanger (13) for controlling the temperature of an indoor climate being arranged in the air-conditioning branch (7), and at least one hot water tank (9) being arranged in the hot water branch (6), a first bypass connection between the feed line (3) and the return line (4) being configured parallel to the air-conditioning branch (7) as a switchable bypass connection (17), **characterized in that**, parallel to the first bypass connection (17) at least one second bypass connection (14) is provided between the feed line (3) and the return line (4) parallel to the air-conditioning branch (7), the at least one second bypass connection being configured as an open bypass connection (14), a buffer tank (18) being arranged, in particular, in the open bypass connection (14).

2. Heating system according to Claim 1, **characterized in that** the heating and cooling circuit (5) has at least one first pump (11) which is arranged, in particular, in the return line.

3. Heating system according to Claim 1 or 2, **characterized in that** a second pump (12) is arranged in the air-conditioning branch (7).

4. Heating system according to Claim 1, **characterized in that** the switchable bypass connection (17) is incorporated into the cooling and heating circuit via the first multiway valve (8) which is configured, in particular, as a four-way valve (20).

5. Heating system according to Claim 1, **characterized in that** the switchable bypass connection (17) is incorporated into the cooling and heating circuit (5) via a second multiway valve (19) which is configured, in particular, as a three-way valve.

6. Heating system according to one of the preceding claims, **characterized in that** a supplementary heater (15) which is configured, in particular, as an electric supplementary heater is arranged in the feed line (3).

## Revendications

1. Système de chauffage (1) comprenant au moins une source de chaleur (2) pouvant être commutée entre un mode de chauffage et un mode de refroidissement (2) et destinée à refroidir ou chauffer de manière sélective un liquide caloporteur, en particulier de l'eau, qui est guidé dans un circuit de refroidissement et de chauffage (5) dans lequel la source de chaleur (2) est intégrée par une canalisation montante (3) et une canalisation de retour (4), le circuit de refroidissement et de chauffage (5) comprenant une branche de climatisation (7) et une branche d'eau chaude (6), reliées à la canalisation montante (3) par une première vanne multivoies (8) et débouchant dans la canalisation de retour (4), au moins un échangeur de chaleur (13) étant disposé dans la branche de climatisation (7) pour réguler la température d'un climat ambiant et au moins un réservoir d'eau chaude (9) étant disposé dans la branche d'eau chaude (6), une première liaison de dérivation entre la canalisation montante (3) et la canalisation de retour (4), parallèlement à la branche de climatisation (7), étant conçue comme une liaison de dérivation commutable (17), **caractérisé en ce que**
au moins une deuxième liaison de dérivation (14) entre la canalisation montante (3) et la canalisation de retour (4) parallèlement à la branche de climatisation (7) est prévue parallèlement à la première connexion de dérivation (17), l'au moins une deuxième liaison de dérivation étant conçue comme une liaison de dérivation ouverte (14), un réservoir intermédiaire (18) étant en particulier disposé dans la liaison de dérivation ouverte (14).

2. Système de chauffage selon la revendication 1, **caractérisé en ce que** le circuit de chauffage et de refroidissement (5) comporte au moins une première pompe (11) qui est notamment disposée dans la canalisation de retour.

3. Système de chauffage selon la revendication 1 ou 2, **caractérisé en ce qu'**une deuxième pompe (12) est disposée dans la branche de climatisation (7).

4. Système de chauffage selon la revendication 1, **caractérisé en ce que** la liaison de dérivation commutable (17) est intégrée dans le circuit de refroidissement et de chauffage par le biais de la première vanne multivoies (8) qui est conçue notamment comme une vanne à quatre voies (20).

5. Système de chauffage selon la revendication 1, **caractérisé en ce que** la liaison de dérivation commutable (17) est intégrée dans le circuit de refroidissement et de chauffage (5) par le biais d'une deuxième vanne multivoies (19) qui est conçue notamment comme une vanne à trois voies.

6. Système de chauffage selon l'une des revendications précédentes, **caractérisé en ce qu'**un dispositif de chauffage (15), qui est notamment conçu comme un dispositif de chauffage électrique, est disposé dans la canalisation montante (3).
